# EUROPÄISCHE PATENTSCHRIFT

(11) **EP 3 918 892 B1**
(45) Veröffentlichungstag und Bekanntmachung des Hinweises auf die Patenterteilung: **28.05.2025**
(21) Anmeldenummer: 21172520.5
(22) Anmeldetag: 06.05.2021
(51) Int. Cl.: A01B 59/06, B60K 35/10, B60K 35/53, B60K 35/80, G05G 1/02, G05G 1/08

(54) **VERFAHREN ZUR POSITIONSEINSTELLUNG EINES KRAFTHEBERS**
METHOD FOR ADJUSTING THE POSITION OF A POWER LIFT
PROCÉDÉ DE RÉGLAGE DU POSITIONNEMENT D'UN DISPOSITIF DE LEVAGE

(30) Priorität: 02.06.2020 DE 102020206862
(43) Veröffentlichungstag der Anmeldung: 08.12.2021
(73) Patentinhaber: Deere & Company, Moline, IL 61265 (US)
(72) Erfinder: WAGNER, CHRISTOPH, 68163 Mannheim (DE); AHRENS, ANDREAS, 68163 Mannheim (DE)
(74) Vertreter: Dehnhardt, Florian Christopher

(56) Entgegenhaltungen:
- EP-B1- 3 321 763
- DE-A1- 102009 016 919
- DE-A1- 3 207 546

## Beschreibung

Die Erfindung betrifft ein Verfahren zur Einstellung eines Krafthebers eines landwirtschaftlichen Nutzfahrzeugs mittels eines Steuerorgans, welches bezüglich einer Längsachse rotationsbeweglich und entlang der Längsachse translationsbeweglich ist, wobei unterschiedliche Soll-Positionen des Krafthebers innerhalb eines durch eine vorbestimmte untere Grenzposition und eine vorbestimmte obere Grenzposition begrenzten Positionsbereiches mittels einer unterschiedlichen Bewegungssteuerung des Steuerorgans eingestellt werden, wobei der Kraftheber mittels des Steuerorgans in mindestens die vorbestimmte untere Grenzposition, die vorbestimmte obere Grenzposition, sowie in eine durch eine vorbestimmte Funktionsposition zwischen der unteren Grenzposition und der oberen Grenzposition gegebene vorbestimmte Soll-Position einstellbar ist, die eine Arbeitsposition des Krafthebers für eine Arbeitsfunktion des Nutzfahrzeugs ist.

Kraftheber werden u.a. dazu verwendet, je nach geplantem Arbeitseinsatz verschiedene Anbaugeräte mit dem landwirtschaftlichen Nutzfahrzeug zu verbinden. Für eine ordnungsgemäße Handhabung des Anbaugerätes ist der Kraftheber in unterschiedliche Positionen entlang einer Fahrzeugvertikalen einstellbar. Für diese Einstellungen sind in der Fahrerkabine des Nutzfahrzeugs üblicherweise entsprechende Betätigungselemente vorgesehen, die der Fahrer bedienen muss.

In diesem Zusammenhang geht aus der DE 10 2009 016 919 A1 eine Anordnung hervor, bei der sich durch Drehen eines als Handrad ausgebildeten Bedienelements ein Sollwert einer Hubverstellung eines an einem landwirtschaftlichen Traktor angeordneten Dreipunkt-Krafthebers vorgeben lässt. Durch Drücken von dem Handrad zugeordneten Tasten ist es ferner möglich einen zuvor eingestellten Grenzwert für eine obere Hublage oder aber eine augenblickliche Sollwertvorgabe abzuspeichern.

Der vorliegenden Erfindung liegt die Aufgabe zugrunde, die Positionseinstellung des Krafthebers für den Fahrer zu vereinfachen.

Diese Aufgabe wird durch ein Verfahren mit den Merkmalen des Patentanspruchs 1 gelöst.

Weitere vorteilhafte Ausgestaltungen des erfindungsgemäßen Verfahrens gehen aus den Unteransprüchen hervor.

Das Verfahren gemäß Patentanspruch 1 verwendet ein Steuerorgan zur Positionseinstellung eines Krafthebers eines landwirtschaftlichen Nutzfahrzeugs. Das Steuerorgan ist bezüglich einer Längsachse rotationsbeweglich und entlang dieser Längsachse translationsbeweglich. Unterschiedliche Soll-Positionen des Krafthebers befinden sich innerhalb oder entlang eines Positionsbereiches, welcher durch eine vorbestimmte untere Grenzposition und eine vorbestimmte obere Grenzposition begrenzt ist. Die unterschiedlichen Soll-Positionen des Krafthebers werden durch eine unterschiedliche Bewegungssteuerung des Steuerorgans eingestellt. Mit anderen Worten werden einzelne Soll-Positionen des Krafthebers mittels einer spezifischen Translationsbewegung und/oder Rotationsbewegung des Steuerorgans eingestellt. Genauer gesagt ist der Kraftheber mittels des Steuerorgans in mindestens die vorbestimmte untere Grenzposition, die vorbestimmte obere Grenzposition, sowie in eine durch eine vorbestimmte Funktionsposition zwischen der unteren Grenzposition und der oberen Grenzposition gegebene vorbestimmte Soll-Position einstellbar, die eine Arbeitsposition des Krafthebers für eine Arbeitsfunktion des Nutzfahrzeugs ist. Hierbei wird der Kraftheber mittels einer translatorischen Steuerbewegung des Steuerorgans in die vorbestimmte Funktionsposition eingestellt.

Hierdurch kann der Kraftheber schnell und exakt in die Funktionsposition eingestellt werden. Dies ist beispielsweise dann von Vorteil, wenn der Anwender während des Arbeitseinsatzes ein Anbaugerät mittels des Krafthebers aus einer anderen aktuellen Position heraus in die vorbestimmte Arbeitsposition einstellen oder wieder zurückstellen möchte.

Der Kraftheber ist mittels des Steuerorgans in verschiedene Soll-Positionen einstellbar, die für einen effizienten Arbeitseinsatz des Nutzfahrzeugs relevant sind und deshalb bereits vorbestimmt sind oder vorbestimmt werden können. Hierdurch sind bei dem jeweiligen Arbeitseinsatz für den Kraftheber und gegebenenfalls dessen Anbaueinheit wichtige Positionen schnell, komfortabel und effizient erreichbar. Die Vorbestimmung einzelner Soll-Positionen kann z.B. im Rahmen eines Kalibrierungsvorganges vor dem eigentlichen Arbeitseinsatz des Nutzfahrzeugs mit seinem Kraftheber durchgeführt werden. Dies betrifft insbesondere die untere und obere Grenzposition. Hierdurch können unerwünschte extreme Soll-Positionen und entsprechende mechanische Beschädigungen des Krafthebers und des Nutzfahrzeugs bei der Positionseinstellung technisch zuverlässig vermieden werden. Alternativ können einzelne Soll-Positionen auch zu verschiedenen Zeitpunkten variabel definiert bzw. vorbestimmt werden. Dies betrifft insbesondere die für den Fahrer bzw. Anwender relevante Funktionsposition zwischen der unteren Grenzposition und der oberen Grenzposition.

Die Möglichkeit, mit dem Steuerorgan eine rotatorische und/oder translatorische Steuerbewegung durchzuführen, erlaubt eine Vielzahl unterschiedlicher Positionseinstellungen des Krafthebers mit einem einzigen Betätigungselement. Auf herkömmlich notwendige mehrere und unterschiedliche Betätigungselemente zur Abdeckung unterschiedlicher Positionseinstellungen des Krafthebers kann kostensparend verzichtet werden. Außerdem ermöglicht dieses Steuerorgan dem Fahrer bzw. Anwender eine komfortable Handhabung und Steuerung des Krafthebers. Dies wiederum hilft diesem, den jeweiligen Arbeitseinsatz effizienter durchzuführen.

Das Steuerorgan wirkt vorteilhaft als ein Drehrad (Rotationsbewegung) mit einer Druckfunktion (Translationsbewegung), um unterschiedliche Positionseinstellungen zu bewirken.

Vorzugsweise entsprechen einzelne Positionseinstellungen bzw. Soll-Positionen entweder einer Rotationsbewegung oder einer Translationsbewegung oder einer kombinierten Rotations- und Translationsbewegung. Diese kombinierte Steuerbewegung des Steuerorgans wird insbesondere dadurch realisiert, dass eine rotatorische Steuerbewegung und eine translatorische Steuerbewegung aufeinanderfolgend jeweils zumindest einmal durchgeführt werden. Dabei kann die Reihenfolge der beiden Bewegungsarten (Rotation und Translation) abhängig von der gewünschten Positionseinstellung unterschiedlich sein.

Die verschiedenen gewünschten Positionseinstellungen können als Soll-Positionen betrachtet werden, welche jeweils einer spezifischen Steuerbewegung des Steuerorgans entsprechen.

Die untere Grenzposition und die obere Grenzposition stellen zwei extreme Soll-Positionen dar, welche den Positionsbereich begrenzen. Der Positionsbereich ermöglicht es, verschiedene Höhenpositionen des Krafthebers einzustellen. Der Positionsbereich erstreckt sich insbesondere etwa entlang einer Fahrzeugvertikalen.

Die Soll-Positionen befinden sich vorzugsweise auf einer gedachten geraden oder bogenförmigen Linie des Positionsbereiches.

Die jeweilige Soll-Position ist vorzugsweise durch einen Referenzpunkt des Krafthebers repräsentiert. Beispielsweise handelt es sich bei dem Referenzpunkt um eine Kopplungsstelle am Freiende eines Unterlenkers des Krafthebers, an der eine Anbaueinheit (z.B. Anbaugerät oder Ballastiergewicht) mit dem Kraftheber gekoppelt wird. Alternativ ist der Referenzpunkt eine andere geeignete Stelle des Krafthebers.

Bei dem landwirtschaftlichen Nutzfahrzeug handelt es sich vorzugsweise um einen Traktor bzw. Schlepper.

Der Kraftheber ist ganz allgemein als ein Hubwerk ausgebildet. Es handelt sich vorzugsweise um einen Heck- oder Frontkraftheber für das Nutzfahrzeug. Insbesondere ist der Kraftheber als ein Dreipunkt-Kraftheber mit einem Oberlenker und zwei Unterlenkern ausgebildet.

Die vorbestimmten Soll-Positionen werden vorzugsweise abgespeichert, um sie beim Betrieb des Krafthebers wieder abrufen zu können. Beispielsweise sind die vorbestimmten Soll-Positionen in einem Steuergerät abgespeichert, welches einer Ansteuerung des Krafthebers entsprechend der Bewegungssteuerung des Steuerorgans dient. Die Abspeicherung einzelner Soll-Positionen, insbesondere der Funktionsposition, kann in einer Mehrfachfunktion mittels des Steuerorgans selbst erfolgen. Beispielsweise kann eine aktuelle Positionseinstellung des Krafthebers durch längeres (eine vorgegebene Latenzzeit überschreitendes) Drücken des Steuerorgans in dessen Translationsrichtung abgespeichert werden. Alternativ kann ein vom Steuerorgan getrenntes Betätigungselement zur Vorbestimmung und Abspeicherung mindestens einer Soll-Position benutzt werden.

Bei der vorbestimmten Funktionsposition handelt es sich um eine Arbeitsposition des Krafthebers für eine Arbeitsfunktion des Nutzfahrzeugs mittels seiner Anbaueinheit. Hierdurch kann eine für den jeweiligen Arbeitseinsatz optimale Höhenposition der Anbaueinheit vorbestimmt und bei Bedarf schnell eingestellt werden. Mit der Arbeitsposition können anwenderfreundlich unterschiedliche Anbaueinheiten, insbesondere Anbaugeräte und unterschiedliche Bodenbeschaffenheiten eines zu bearbeitenden Feldes berücksichtigt werden, um einen effizienten Arbeitseinsatz zu unterstützen.

In einer bevorzugten Ausführungsform werden mehrere Funktionspositionen, insbesondere Arbeitspositionen, zwischen beiden Grenzpositionen vorbestimmt. Dies ist beispielsweise vorteilhaft, wenn während des Arbeitseinsatzes für ein Anbaugerät mehrere Höhenpositionen relevant sind (z.B. abschnittsweise unterschiedliche Beschaffenheit des zu bearbeitenden Ackerbodens).

Um eine vom Fahrer bzw. Anwender gewünschte Feinjustierung der Positionseinstellungen des Krafthebers technisch unkompliziert und komfortabel zu ermöglichen, wird der Kraftheber ausgehend von der eingestellten Funktionsposition vorzugsweise mittels einer rotatorischen Steuerbewegung des Steuerorgans in eine niedrigere oder höhere Soll-Position zwischen den beiden Grenzpositionen eingestellt.

Vorzugsweise wird der Kraftheber mittels einer kombinierten Steuerbewegung (translatorisch und rotatorisch) des Steuerorgans ausgehend von einer beliebigen aktuellen Position in eine nächstniedrigere oder nächsthöhere vorbestimmte Soll-Position eingestellt. Ist eine derartige vorbestimmte Soll-Position eingestellt, kann von dieser Position aus erneut mittels der vorgenannten kombinierten Steuerbewegung eine nächstniedrigere oder nächsthöhere vorbestimmte Soll-Position eingestellt werden. Dies unterstützt den Anwender bei der steuerungstechnisch einfachen Einstellung des Krafthebers in unterschiedliche vorbestimmte Soll-Positionen. Bei der kombinierten Steuerbewegung erfolgt insbesondere zunächst die translatorische Steuerbewegung und danach die rotatorische Steuerbewegung.

Mittels einer geeigneten Steuerbewegung des Steuerorgans kann entschieden werden, ob der Kraftheber ausgehend von einer aktuellen Positionseinstellung abgesenkt oder angehoben werden soll. Zu diesem Zweck wird vorteilhaft eine unterschiedliche Rotationsrichtung der rotatorischen Steuerbewegung herangezogen. Vorzugsweise erfolgt die Entscheidung, ob der Kraftheber in eine niedrigere Position (z.B. niedrigere Soll-Position oder nächstniedrigere vorbestimmte Soll-Position) abgesenkt oder in eine höhere Position (z.B. höhere Soll-Position oder nächsthöhere vorbestimmte Soll-Position) angehoben werden soll, in Abhängigkeit von einer Rotationsrichtung der rotatorischen Steuerbewegung. Dies unterstützt eine intuitive Bedienung des Steuerorgans. Insbesondere entspricht eine Rotationsbewegung des Steuerorgans im Uhrzeigersinn einer gewünschten niedrigeren Position des Krafthebers, während eine Rotationsbewegung des Steuerorgans entgegen dem Uhrzeigersinn einer gewünschten höheren Position des Krafthebers entspricht.

In einer weiteren bevorzugten Ausführungsform erfolgt eine Signalisierung, sobald eine Bewegungsstellung des Steuerorgans erreicht ist, welche eine vorbestimmte Soll-Position des Krafthebers repräsentiert. Hierdurch wird der Fahrer bzw. Anwender nach Art einer den Arbeitseinsatz unterstützenden Assistenzfunktion automatisch informiert, was die Steuerung des Krafthebers weiter erleichtert.

Die Signalisierung ist beispielsweise haptisch und/oder akustisch und/oder optisch ausgebildet.

Eine haptische Signalisierung erfolgt vorzugsweise, indem die rotatorische Steuerbewegung bei Erreichen der vorgenannten Bewegungsstellung des Steuerorgans (z.B. mittels einer elektronisch gesteuerten Bremseinheit) abgebremst oder angehalten wird.

Alternativ kann das Steuerorgan zur haptischen Signalisierung translatorisch entgegen der üblichen translatorischen Steuerbewegungsrichtung ruckartig bewegt werden (z.B. mittels einer Feder oder eines Elektromagneten), sobald die eine vorbestimmte Soll-Position des Krafthebers repräsentierende Bewegungsstellung des Steuerorgans erreicht ist. Nach Ablauf einer Signalzeit wird das Steuerorgan wieder automatisch in seine letzte Bewegungsstellung translatorisch zurückgeführt.

Für eine haptische Signalisierung kann eine kurzzeitige Vibration des Steuerorgans vorgesehen sein.

Für eine akustische Signalisierung kann am Steuerorgan selbst oder außerhalb des Steuerorgans (und vorzugsweise in der Fahrerkabine) ein akustisches Signal generiert werden.

Das oben beschriebene Merkmal einer Signalisierung ist nicht notwendigerweise auf die Anwendung einer vorbestimmten Soll-Position gemäß den Patentansprüchen beschränkt. Vielmehr kann der Gedanke der Signalisierung mit seinen in den Patentansprüchen und/oder der Beschreibung und/oder den Zeichnungen offenbarten unterschiedlichen Ausgestaltungen auf ein beliebiges Steuerorgan mit einer beliebigen Bewegungssteuerung und einer beliebigen Bewegungsstellung angewendet werden, deren Erreichen eine beliebige vorbestimmte oder vordefinierte Soll-Position eines Krafthebers repräsentiert. Dieser unabhängige Gedanke einer Signalisierung im Falle des Erreichens einer eine Soll-Position des Krafthebers repräsentierenden Bewegungsstellung des Steuerorgans kann mit einem beliebigen Merkmal der Patentansprüche und/oder der Beschreibung und/oder den Zeichnungen kombiniert werden.

Zur Positionseinstellung des Krafthebers kann eine Anordnung mit dem Steuerorgan gemäß Patentanspruch 7 vorgesehen sein. Vorzugsweise enthält diese Anordnung eine Steuereinrichtung, welche die verschiedenen Steuerbewegungen des Steuerorgans in Form von entsprechenden Bewegungssteuersignalen empfängt. Abhängig von diesen Bewegungssteuersignalen und gegebenenfalls weiteren Parametern steuert die Steuereinrichtung den Kraftheber an, um diesen entsprechend der Steuerbewegungen des Steuerorgans anzuheben oder abzusenken. Beispielsweise steuert die Steuereinrichtung hydraulische Steuerventile an, welche in bekannter Weise ein hydraulisches Anheben und Absenken des Krafthebers bewirken. Zudem veranlasst die Steuereinrichtung vorzugsweise auch eine der oben beschriebenen Ausgestaltungen der Signalisierung am Steuerorgan selbst und/oder an einer bezüglich des Steuerorgans externen Signaleinheit.

Das erfindungsgemäße Verfahren und eine entsprechende Anordnung werden im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
Fig. 1 eine blockschaltbildartige Anordnung zur Durchführung des erfindungsgemäßen Verfahrens, und
Fig. 2 eine perspektivische und schematische Darstellung eines Steuerorgans als Bestandteil der Anordnung.

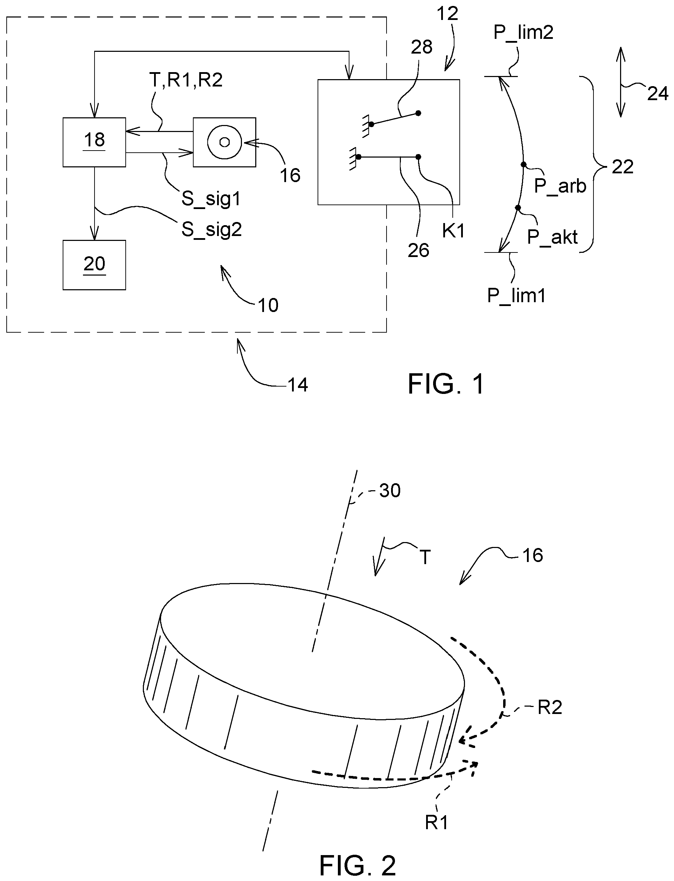

Fig. 1 zeigt schematisch eine Anordnung 10 zur Positionseinstellung eines Krafthebers 12. Der Kraftheber 12 ist in bekannter Weise an ein landwirtschaftliches Nutzfahrzeug 14 montiert. Die Anordnung 10 ist Bestandteil des Nutzfahrzeugs 14 und insbesondere in einer hier nicht dargestellten Fahrerkabine integriert. Die Anordnung 10 enthält neben einem manuell betätigbaren Steuerorgan 16 zumindest noch eine Steuereinrichtung 18. Optional ist auch eine Signaleinheit 20 für eine akustische Signalisierung (z.B. Lautsprecher) und/oder optische Signalisierung (z.B. Display, Bildschirm, Warnlampe) einer spezifischen Bewegungsstellung des Steuerorgans 16 enthalten.

Unterschiedliche Soll-Positionen des Krafthebers 12 können mittels des Steuerorgans 16 eingestellt werden. Diese Soll-Positionen befinden sich auf einem gedachten Positionsbereich 22, der entlang einer Fahrzeugvertikalen 24 durch eine untere Grenzposition P_lim1 und eine obere Grenzposition P_lim2 begrenzt ist.

Mittels einer noch zu beschreibenden unterschiedlichen Bewegungssteuerung des Steuerorgans 16 lässt sich der Kraftheber 12 in unterschiedliche Soll-Positionen überführen. Die einzelnen Positionen auf dem Positionsbereich 22 repräsentieren einen geeigneten Punkt des Krafthebers 12, beispielsweise eine Kopplungsstelle K1 eines Unterlenkers 26. Zwei parallele Unterlenker 26 und ein Oberlenker 28 können als Bestandteile eines Dreipunkt-Krafthebers in üblicher Weise eine Anbaueinheit (z.B. Anbaugerät oder Ballastiergewicht) ankoppeln.

Die beiden Grenzpositionen P_lim1 und P_lim2 sind vorbestimmt und in der Steuereinrichtung 18 abgespeichert. Die Bewegungssteuerung ist in der Steuereinrichtung 18 derart definiert, dass eine einzustellende Soll-Position die untere Grenzposition P_lim1 nicht unterschreiten und die obere Grenzposition P_lim2 nicht überschreiten kann. Zwischen den beiden Grenzpositionen P_lim1, P_lim2 kann mindestens eine weitere für den Kraftheber 12 relevante Funktionsposition als Soll-Position vorbestimmt und in der Steuereinrichtung 18 abgespeichert werden. Bei einer solchen Funktionsposition handelt es sich z.B. um eine Arbeitsposition P_arb des Krafthebers 12, dessen spezifische Höheneinstellung für einen effizienten Arbeitseinsatz des verwendeten Anbaugerätes auf dem zu bearbeitenden Feld einzuhalten ist. Es können auch für denselben Arbeitseinsatz entlang des Positionsbereiches mehrere unterschiedliche Arbeitspositionen P_arb vorbestimmt werden, etwa bei einem zu bearbeitenden Feld mit abschnittsweise unterschiedlicher Bodenbeschaffenheit. Abhängig vom bearbeiteten Feldabschnitt kann dann die jeweils zutreffende Arbeitsposition P_arb als neue Soll-Position eingestellt werden.

In Fig. 2 ist schematisch das Steuerorgan 16 als ein kombiniertes Druck-Dreh-Rad bzw. als Druck-Dreh-Steller dargestellt. Bezüglich einer Längsachse 30 ist das Steuerorgan 16 rotationsbeweglich, während es entlang dieser Längsachse 30 translationsbeweglich ist. Die Rotationsbeweglichkeit erlaubt zwei entgegengesetzte rotatorische Steuerdrehrichtungen R1 (z.B. entgegen dem Uhrzeigersinn) und R2 (z.B. mit dem Uhrzeigersinn). Eine translatorische Steuerlängsrichtung T entspricht vorzugsweise der Richtung einer Druckkraft gegen das Steuerorgan 16.

Die Logik der Bewegungssteuerung für das Steuerorgan 16 wird nachfolgend beschrieben. Mittels einer translatorischen Steuerbewegung des Steuerorgans 16 in Steuerlängsrichtung T wird der Kraftheber 12 in die vorbestimmte Funktionsposition bzw. Arbeitsposition P_arb eingestellt oder in eine von mehreren vorbestimmten Funktionspositionen bzw. Arbeitspositionen P_arb eingestellt. Ausgehend von der eingestellten Funktionsposition bzw. Arbeitsposition P_arb wird der Kraftheber 12 mittels einer rotatorischen Steuerbewegung des Steuerorgans 16 entweder in eine niedrigere oder höhere Soll-Position zwischen den beiden Grenzpositionen P_lim1, P_lim2 eingestellt. Dabei folgt die rotatorische Steuerbewegung für eine niedrigere Soll-Position vorzugsweise der Steuerdrehrichtung R2 mit dem Uhrzeigersinn, während die rotatorische Steuerbewegung gegen den Uhrzeigersinn (Steuerdrehrichtung R1) eine höhere Soll-Position des Krafthebers 12 bewirkt.

Ausgehend von irgendeiner aktuellen Position des Krafthebers 12 auf dem Positionsbereich 22 wird der Kraftheber 12 mittels einer kombinierten translatorischen Steuerbewegung (Steuerlängsrichtung T) und darauffolgenden rotatorischen Steuerbewegung des Steuerorgans 16 entweder in eine nächstniedrigere vorbestimmte Soll-Position oder eine nächsthöhere vorbestimmte Soll-Position eingestellt. Dabei bewirkt die rotatorische Steuerbewegung im Uhrzeigersinn (Steuerdrehrichtung R2) vorzugsweise eine Einstellung des Krafthebers 12 in die nächstniedrigere vorbestimmte Soll-Position, während die rotatorische Steuerbewegung entgegen dem Uhrzeigersinn (Steuerdrehrichtung R1) vorzugsweise eine Einstellung des Krafthebers 12 in die nächsthöhere vorbestimmte Soll-Position erzeugt.

Der Kraftheber 12 befindet sich beispielsweise in einer aktuellen Position P_akt zwischen der vorbestimmten unteren Grenzposition P_lim1 und der vorbestimmten Arbeitsposition P_arb. Mittels einer translatorischen Steuerbewegung in Steuerlängsrichtung T wird der Kraftheber 12 dann automatisch in die Arbeitsposition P_arb angehoben. Ausgehend von dieser eingestellten Arbeitsposition P_arb kann der Kraftheber 12 weiter in Richtung oberer Grenzposition P_lim2 angehoben werden, indem das Steuerorgan 16 in Steuerdrehrichtung R1 gedreht wird. Analog kann der Kraftheber 12 ausgehend von der eingestellten Arbeitsposition P_arb weiter in Richtung unterer Grenzposition P_lim1 abgesenkt werden, indem das Steuerorgan 16 in entgegengesetzter Steuerdrehrichtung R2 gedreht wird.

Ausgehend von der eingestellten aktuellen Position P_akt kann der Kraftheber 12 mittels der oben beschriebenen kombinierten translatorischen und darauffolgenden rotatorischen Steuerbewegung automatisch in die nächstniedrigere vorbestimmte Soll-Position (entspricht der unteren Grenzposition P_lim1) oder nächsthöhere vorbestimmte Soll-Position (entspricht der Arbeitsposition P_arb) eingestellt werden. Ausgehend von der eingestellten Arbeitsposition P_arb kann die kombinierte translatorische und darauffolgende rotatorische Steuerbewegung nochmals durchgeführt werden, um den Kraftheber 12 automatisch in die obere Grenzposition P_lim2 einzustellen.

Sobald das Steuerorgan 16 während der Bewegungssteuerung eine Bewegungsstellung erreicht, welche eine vorbestimmte Soll-Position (z.B. P_lim1 oder P_lim2 oder P_arb) des Krafthebers 12 repräsentiert, sendet die Steuereinrichtung 18 spezifische Steuersignale S_sig1 an das Steuerorgan 16 und/oder spezifische Steuersignale S_sig2 an die Signaleinheit 20, welche dem Fahrer bzw. Anwender die erreichte Bewegungsstellung des Steuerorgans 16 signalisieren. Als Signalisierung veranlassen die Steuersignale S_sig1 beispielsweise eine elektronisch angesteuerte Bremseinheit dazu, eine rotatorische Steuerbewegung R1 bzw. R2 des Steuerorgans 16 abzubremsen oder anzuhalten. Alternativ können die Steuersignale S_sig1 (z.B. über einen angesteuerten Federmechanismus oder Elektromagneten) bewirken, dass das Steuerorgan 16 automatisch entgegen der Steuerlängsrichtung T translatorisch bewegt wird. Das Steuerorgan 16 kann durch die Steuersignale S_sig1 auch in eine haptisch-mechanische Vibration versetzt werden. Weiterhin können die Steuersignale S_sig1 am Steuerorgan 16 eine akustische Signalisierung generieren.

Die Steuersignale S_sig2 können in der Signaleinheit 20 eine akustische Signalisierung und/oder optische Signalisierung für den Fahrer bzw. Anwender erzeugen.

Es sei darauf hingewiesen, dass einzelne Details in den Zeichnungen nicht notwendigerweise maßstäblich dargestellt sind.

## Patentansprüche

1. Verfahren zur Positionseinstellung eines Krafthebers (12) eines landwirtschaftlichen Nutzfahrzeugs (14) mittels eines Steuerorgans (16), welches bezüglich einer Längsachse (30) rotationsbeweglich und entlang der Längsachse (30) translationsbeweglich ist, wobei unterschiedliche Soll-Positionen (P_lim1, P_arb, P_lim2) des Krafthebers (12) innerhalb eines durch eine vorbestimmte untere Grenzposition (P_lim1) und eine vorbestimmte obere Grenzposition (P_lim2) begrenzten Positionsbereiches (22) mittels einer unterschiedlichen Bewegungssteuerung (T, R1, R2) des Steuerorgans (16) eingestellt werden, wobei der Kraftheber (12) mittels des Steuerorgans (16) in mindestens die vorbestimmte untere Grenzposition (P_lim1), die vorbestimmte obere Grenzposition (P_lim2), sowie in eine durch eine vorbestimmte Funktionsposition (P_arb) zwischen der unteren Grenzposition (P_lim1) und der oberen Grenzposition (P_lim2) gegebene vorbestimmte Soll-Position einstellbar ist, die eine Arbeitsposition (P_arb) des Krafthebers (12) für eine Arbeitsfunktion des Nutzfahrzeugs (14) ist, **dadurch gekennzeichnet, dass** der Kraftheber (12) mittels einer translatorischen Steuerbewegung (T) des Steuerorgans (16) in die vorbestimmte Funktionsposition (P_arb) eingestellt wird.

2. Verfahren nach Anspruch 1, **dadurch gekennzeichnet, dass** der Kraftheber (12) ausgehend von der eingestellten Funktionsposition (P_arb) mittels einer rotatorischen Steuerbewegung (R1, R2) des Steuerorgans (16) in eine niedrigere oder höhere Soll-Position zwischen den beiden Grenzpositionen (P_lim1, P_lim2) eingestellt wird.

3. Verfahren nach Anspruch 1 oder 2, **dadurch gekennzeichnet, dass** der Kraftheber (12) mittels einer kombinierten translatorischen und rotatorischen Steuerbewegung (T, R1; T, R2) des Steuerorgans (16) in eine nächstniedrigere oder nächsthöhere vorbestimmte Soll-Position (P_lim1, P_arb, P_lim2) eingestellt wird.

4. Verfahren nach Anspruch 2 oder 3, **dadurch gekennzeichnet, dass** die Entscheidung zwischen der niedrigeren Soll-Position oder nächstniedrigeren vorbestimmten Soll-Position (P_arb, P_lim1) einerseits und der höheren Soll-Position oder nächsthöheren vorbestimmten Soll-Position (P_arb, P_lim2) andererseits in Abhängigkeit von einer Rotationsrichtung (R1, R2) der rotatorischen Steuerbewegung erfolgt.

5. Verfahren nach einem der vorhergehenden Ansprüche, **dadurch gekennzeichnet, dass** bei Erreichen einer eine vorbestimmte Soll-Position (P_lim1, P_arb, P_lim2) des Krafthebers (12) repräsentierenden Bewegungsstellung des Steuerorgans (16) eine Signalisierung (S_sig1, S_sig2) erfolgt.

6. Verfahren nach Anspruch 5, **dadurch gekennzeichnet, dass** zur Signalisierung (S_sig1, S_sig2)
- die rotatorische Steuerbewegung (R1, R2) des Steuerorgans (16) abgebremst oder angehalten wird, und/oder
- das Steuerorgan (16) translatorisch entgegen der translatorischen Steuerbewegung (T) bewegt wird, und/oder
- das Steuerorgan (16) in eine mechanische Vibration versetzt wird, und/oder
- am Steuerorgan (16) oder außerhalb des Steuerorgans (16) ein akustisches Signal generiert wird.

7. Anordnung (10) mit einem Steuerorgan (16) zur Positionseinstellung eines Krafthebers (12) eines landwirtschaftlichen Nutzfahrzeugs (14), wobei das Steuerorgan (16) bezüglich einer Längsachse (30) rotationsbeweglich und entlang der Längsachse (30) translationsbeweglich ist, derart, dass unterschiedliche Soll-Positionen (P_lim1, P_arb, P_lim2) des Krafthebers (12) innerhalb eines durch eine vorbestimmte untere Grenzposition (P_lim1) und eine vorbestimmte obere Grenzposition (P_lim2) begrenzten Positionsbereiches (22) mittels einer unterschiedlichen Bewegungssteuerung (T, R1, R2) des Steuerorgans (16) einstellbar sind, wobei der Kraftheber (12) mittels des Steuerorgans (16) in mindestens die vorbestimmte untere Grenzposition (P_lim1), die vorbestimmte obere Grenzposition (P_lim2), sowie in eine durch eine vorbestimmte Funktionsposition (P_arb) zwischen der unteren Grenzposition (P_lim1) und der oberen Grenzposition (P_lim2) gegebene vorbestimmte Soll-Position einstellbar ist, die eine Arbeitsposition (P_arb) des Krafthebers (12) für eine Arbeitsfunktion des Nutzfahrzeugs (14) ist, **dadurch gekennzeichnet, dass** der Kraftheber (12) mittels einer translatorischen Steuerbewegung (T) des Steuerorgans (16) in die vorbestimmte Funktionsposition (P_arb) einstellbar ist.

## Claims

1. Method for adjusting the position of a power lift (12) of an agricultural utility vehicle (14) by means of a control member (16) which is rotationally movable relative to a longitudinal axis (30) and translationally movable along the longitudinal axis (30), wherein various target positions (P_lim1, P_arb, P_lim2) of the power lift (12) are adjusted within a position range (22) which is defined by a predetermined lower limit position (P_lim1) and a predetermined upper limit position (P_lim2) by means of a variable movement control (T, R1, R2) of the control member (16), wherein the power lift (12) is able to be adjusted by means of the control member (16) into at least the predetermined lower limit position (P_lim1), the predetermined upper limit position (P_lim2), and into a predetermined target position which is defined by a predetermined functional position (P_arb) between the lower limit position (P_lim1) and the upper limit position (P_lim2) and is a working position (P_arb) of the power lift (12) for a working function of the utility vehicle (14), **characterized in that** the power lift (12) is adjusted by means of a translational control movement (T) of the control member (16) into the predetermined functional position (P_arb).

2. Method according to Claim 1, **characterized in that** starting from the adjusted functional position (P_arb) the power lift (12) is adjusted by means of a rotational control movement (R1, R2) of the control member (16) into a lower or higher target position between the two limit positions (P_lim1, P_lim2).

3. Method according to Claim 1 or 2, **characterized in that** the power lift (12) is adjusted by means of a combined translational and rotational control movement (T, R1; T, R2) of the control member (16) into a next lower or next higher predetermined target position (P_lim1, P_arb, P_lim2) .

4. Method according to Claim 2 or 3, **characterized in that** the decision is made between the lower target position or next lower predetermined target position (P_arb, (P_lim1), on the one hand, and the higher target position or next higher predetermined target position (P_arb, P_lim2), on the other hand, as a function of a rotational direction (R1, R2) of the rotational control movement.

5. Method according to any one of the preceding claims, **characterized in that** a signalling procedure (S_sig1, S_sig2) is carried out when a movement position of the control member (16) representing a predetermined target position (P_lim1, P_arb, P_lim2) of the power lift (12) is attained.

6. Method according to Claim 5, **characterized in that** for the signalling procedure (S_sig1, S_sig2)
- the rotational control movement (R1, R2) of the control member (16) is braked or stopped, and/or
- the control member (16) is moved in a translational manner counter to the translational control movement (T), and/or
- the control member (16) is set into a mechanical vibration, and/or
- an acoustic signal is generated on the control member (16) or outside the control member (16).

7. Arrangement (10) with a control member (16) for adjusting the position of a power lift (12) of an agricultural utility vehicle (14), wherein the control member (16) is rotationally movable relative to a longitudinal axis (30) and translationally movable along the longitudinal axis (30), such that various target positions (P_lim1, P_arb, P_lim2) of the power lift (12) are able to be adjusted within a position range (22) which is defined by a predetermined lower limit position (P_lim1) and a predetermined upper limit position (P_lim2) by means of a variable movement control (T, R1, R2) of the control member (16), wherein the power lift (12) is able to be adjusted by means of the control member (16) into at least the predetermined lower limit position (P_lim1), the predetermined upper limit position (P_lim2), and into a predetermined target position which is defined by a predetermined functional position (P_arb) between the lower limit position (P_lim1) and the upper limit position (P_lim2) and is a working position (P_arb) of the power lift (12) for a working function of the utility vehicle (14), **characterized in that** the power lift (12) can be adjusted by means of a translational control movement (T) of the control member (16) into the predetermined functional position (P_arb).

## Revendications

1. Procédé de réglage de la position d'un vérin de levage (12) d'un véhicule utilitaire agricole (14) au moyen d'un organe de commande (16) qui est mobile en rotation par rapport à un axe longitudinal (30) et mobile en translation le long de l'axe longitudinal (30), différentes positions cibles (P_lim1, P_arb, P_lim2) du vérin de levage (12) dans une gamme de positions (22) délimitée par une position limite inférieure prédéterminée (P_lim1) et une position limite supérieure prédéterminée (P_lim2) étant réglées au moyen d'une commande de mouvement différente (T, R1, R2) de l'organe de commande (16), le vérin de levage (12) étant apte à être réglé au moyen de l'organe de commande (16) au moins dans la position limite inférieure prédéterminée (P_lim1), la position limite supérieure prédéterminée (P_lim2), ainsi que dans une position cible prédéterminée donnée par une position de fonctionnement prédéterminée (P_arb) entre la position limite inférieure (P_lim1) et la position limite supérieure (P_lim2), qui est une position de travail (P_arb) du vérin de levage (12) pour une fonction de travail du véhicule utilitaire (14), **caractérisé en ce que** le vérin de levage (12) est réglé dans la position de fonctionnement prédéterminée (P_arb) au moyen d'un mouvement de commande par translation (T) de l'organe de commande (16).

2. Procédé selon la revendication 1, **caractérisé en ce que** le vérin de levage (12) est réglé à partir de la position de fonctionnement réglée (P_arb) au moyen d'un mouvement de commande par rotation (R1, R2) de l'organe de commande (16) dans une position cible inférieure ou supérieure entre les deux positions limites (P_lim1, P_lim2).

3. Procédé selon la revendication 1 ou la revendication 2, **caractérisé en ce que** le vérin de levage (12) est réglé dans une position cible prédéfinie immédiatement inférieure ou immédiatement supérieure (P_lim1, P_arb, P_lim2) au moyen d'un mouvement de commande combiné en translation et en rotation (T, R1 ; T, R2) de l'organe de commande (16).

4. Procédé selon la revendication 2 ou la revendication 3, **caractérisé en ce que** la décision entre la position cible inférieure ou la position cible prédéterminée immédiatement inférieure (P_arb, P_lim1) d'une part, et la position cible la plus élevée ou la position cible prédéterminée immédiatement supérieure (P_arb, P_lim2) d'autre part, est prise en fonction d'un sens de rotation (R1, R2) du mouvement de commande par rotation.

5. Procédé selon l'une des revendications précédentes, **caractérisé en ce qu'**une signalisation (S_sig1, S_sig2) est émise lorsqu'une position de mouvement de l'organe de commande (16) représentant une position cible prédéterminée (P_lim1, P_arb, P_lim2) du vérin de levage (12) est atteinte.

6. Procédé selon la revendication 5, **caractérisé en ce que**, pour la signalisation (S_sig1, S_sig2),
- le mouvement de commande par rotation (R1, R2) de l'organe de commande (16) est ralenti ou arrêté, et/ou
- l'organe de commande (16) est déplacé en translation dans le sens opposé au mouvement de commande par translation (T), et/ou
- l'organe de commande (16) est soumis à une vibration mécanique, et/ou
- un signal acoustique est généré sur l'organe de commande (16) ou à l'extérieur de l'organe de commande (16).

7. Dispositif (10) ayant un organe de commande (16) pour le réglage de la position d'un vérin de levage (12) d'un véhicule utilitaire agricole (14), l'organe de commande (16) étant mobile en rotation par rapport à un axe longitudinal (30) et mobile en translation le long de l'axe longitudinal (30), de telle sorte que différentes positions cibles (P_lim1, P_arb, P_lim2) du vérin de levage (12) peuvent être réglées à l'intérieur d'une gamme de positions (22) délimitée par une position limite inférieure prédéterminée (P_lim1) et une position limite supérieure prédéterminée (P_lim2) au moyen d'une commande de mouvement différente (T, R1, R2) de l'organe de commande (16), le vérin de levage (12) étant apte à être réglé au moyen de l'organe de commande (16) au moins dans la position limite inférieure prédéterminée (P_lim1), la position limite supérieure prédéterminée (P_lim2), ainsi que dans une position cible prédéterminée donnée par une position de fonctionnement prédéterminée (P_arb) entre la position limite inférieure (P_lim1) et la position limite supérieure (P_lim2), qui est une position de travail (P_arb) du vérin de levage (12) pour une fonction de travail du véhicule utilitaire (14), **caractérisé en ce que** le vérin de levage (12) est apte à être réglé dans la position fonctionnelle prédéterminée (P_arb) au moyen d'un mouvement de commande par translation (T) de l'organe de commande (16).
